# EUROPEAN PATENT SPECIFICATION

(11) **EP 0 595 382 B1**
(45) Date of publication and mention of the grant of the patent: **29.01.1997**
(21) Application number: 93202743.6
(22) Date of filing: 23.09.1993
(51) Int. Cl.: A01F 12/40

(54) **Deflector plate for straw chopper**
Leitblech für Strohhäcksler
Plaque déflectrice pour hache-paille

(30) Priority: 27.10.1992 GB 9222513
(43) Date of publication of application: 04.05.1994
(73) Proprietor: NEW HOLLAND BELGIUM N.V., B-8210 Zedelgem (BE)
(72) Inventor: Van Overschelde, Daniel M.G., B-8820 Torhout (BE); Ramon, Marc E., B-8000 Brugge (BE)
(74) Representative: Vandenbroucke, Alberic

(56) References cited:
- EP-A- 0 106 343
- EP-A- 0 117 590
- EP-A- 0 212 269
- EP-A- 0 357 090
- DE-A- 2 444 550
- GB-A- 2 028 086
- US-A- 3 165 133
- US-A- 3 815 823
- US-A- 4 056 107

## Description

The present invention relates to a crop residue treating device for a combine harvester and more particularly to an improved deflector plate which is operable to direct the flow of crop residue issuing through the discharge hood of the combine harvester either into said treating device or directly onto the ground.

In the following description right hand and left hand references are determined by standing at the rear of the combine harvester facing in a direction of forward travel. Also, in the following description, it is to be understood that such terms as "forward", "rearward", "left", "upwardly", etc., are words of convenience and are not to be construed as limiting terms.

It is common practice to attach a crop residue treating device, such as a straw chopper, a straw spreader or a similar device, to the straw discharge hood of a combine harvester for treating the residue material, generally referred to as "straw", prior to the discharge of the same over the ground. Some operators prefer to use straw choppers which chop the straw into small pieces, whereas others use straw spreaders that scatter the straw in a wide pattern behind the combine. Generally, these treating devices are used to prevent later tillage problems.

However, in some circumstances, straw choppers, spreaders or like devices are not required or even desired, such as is the case where the operator desires to bale or otherwise collect the residue straw material. In such a situation, it is preferable that the straw be discharged directly on the ground into a windrow. To avoid the cumbersome operation of removing the straw chopper or the like from the combine harvester each time an untreated windrow is desired for further processing, or vice versa, attaching the chopper when a chopped residue is wanted, it is a customary practice to provide a straw deflector plate above the straw chopper which can be set either in a first position to deflect the discharged straw towards the inlet of the straw chopper or in a second position to cover said straw chopper inlet whereby the straw bypasses the chopper and is deposited onto the ground without being chopped. A straw deflecting device of such a nature is exemplified in EP-B-0.212.269.

In its position to deflect the straw towards the chopper, the deflector plate in practice extends between the rearwardmost crop processing member of the harvester (being the straw walkers in a conventional combine harvester) and a top portion of the chopper frame. In so doing, and in combination with the two lateral sides and the rear side of the straw hood, a channel-like duct is formed which is open only at the top to receive the straw from the straw walkers and at the bottom to direct the straw into the inlet aperture of the straw chopper. Although not frequently experienced, it nevertheless may happen that for one or other reason related to harvesting or crop conditions, the channel-like duct may become obstructed by crop material building up from the chopper towards the straw walkers, thereby interrupting the continuous flow of straw towards the chopper and hence urging the operator to stop and to remedy the obstruction. Since it is extremely difficult, not to say impossible, and even dangerous to remove the obstruction from a position above the straw walkers, conventional straw choppers commonly are pivotally attached to the straw hood so as to enable the chopper to be hinged out of the way of the downwardly facing outlet of the channel-like duct to thereby allow the operator to clear said duct through the outlet thereof.

Also, when the chopper knives need servicing (e.g. in the sense of replacing damaged knives by new ones), the only way to get to the knives in a more or less convenient manner, again is by pivoting the chopper out of its operative position in a manner such that the top portion of the chopper rotor carrying the knives becomes exposed.

However, offering the means to pivot the straw chopper has the disadvantage that it requires the chopper frame to be more rigid since it has to be a self-supporting structure, with more and complicated parts (such as a hinge shaft and a locking device for example), as such adding weight to the structure and thus to the combine and increasing the costs of the chopper considerably.

It is therefore the objective of the present invention to overcome the aforementioned drawbacks of the prior art arrangements by providing a more convenient accessibility of the region above the straw chopper yet keeping the straw chopper simple in design and construction.

According to the present invention, a combine harvester is provided comprising :
- a discharge outlet for receiving residue material such as straw issuing from the combine harvester;
- a residue chopping device mounted in the vicinity of said discharge outlet for treating said residue material and discharging the same onto the ground; and
- crop deflector means mounted above said residue chopping device and adapted to be disposed between a first position wherein said residue material is deflected into said chopping device and a second position wherein said residue material is deflected through said discharge outlet to thereby bypass said chopping device and to be deposited onto the ground; and
characterized in that
said crop deflector means comprises hatch means for enabling access to an upper region of the residue chopping device. The crop deflector means most conveniently comprises a pivotable structure which defines a central aperture into which the hatch means, in the form of a door, closely fits. The door preferably is held in a closed position by means of quick-release latches enabling a smooth opening of the door whereby the area above the chopping device easily can be reached without having to move the chopping device itself.

A crop deflector device for a straw chopper in accordance with the present invention and applied to a combine harvester will now be described in greater detail, by way of example, with reference to the accompanying drawings, in which :
Figure 1 is a diagrammatic side elevation of a combine harvester provided with a straw chopper and a deflector plate according to the invention;
Figure 2 shows, to a larger scale, a sectional view of a preferred embodiment of the deflector plate in relation to the straw chopper;
Figure 3 is a view as seen in the direction of arrow F in Figure 2; and
Figure 4 is a view similar to Figure 3, but showing an alternative arrangement.

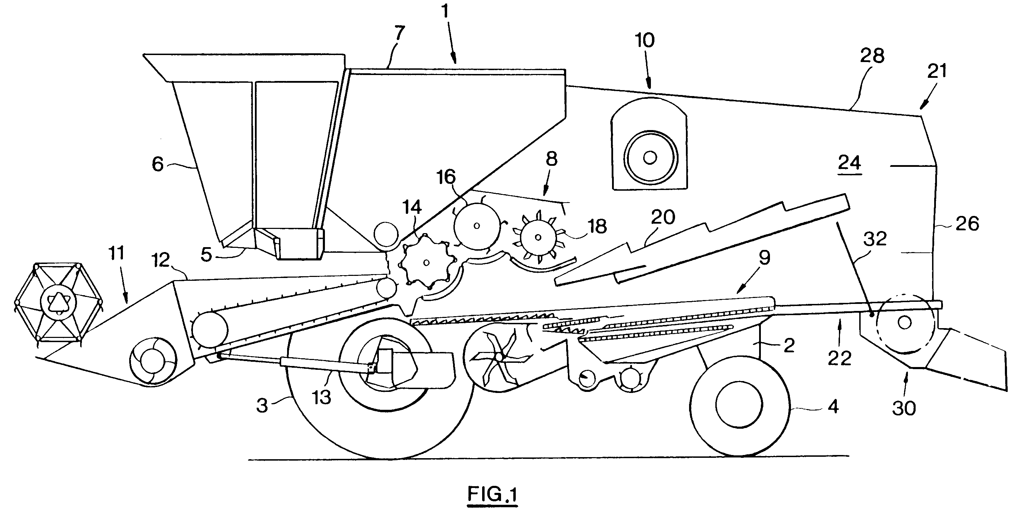

With reference to the drawings, particularly Figure 1, a combine harvester, generally indicated at 1, comprises a main chassis or frame 2 supported on a front pair of drive wheels 3 and a rear pair of steerable wheels 4. Supported on the main chassis 2 are an operator's platform 5, with operator's cab 6, a grain tank 7, a threshing and separating mechanism 8, a grain cleaning mechanism 9 and a power plant or engine 10. A conventional header 11 and straw elevator 12 extend forwardly of the main chassis 2 and the header 11 is pivotally secured to the chassis 2 for generally vertical movement which is controlled by extensible hydraulic cylinders 13.

As the combine harvester 1 is propelled forwardly over a field with standing crop, the latter is severed from the stubble by a sickle bar on the header 11, whereafter the header 11 and the straw elevator 12 supply the cut crop to the threshing and separating mechanism 8. The crop received therein is threshed and separated, that is to say, the crop is rubbed and beaten, whereby the grain, seed or the like, is loosened and separated from the straw, coils or other discardable part of the crop.

The combine harvester illustrated in Figure 1 comprises a conventional threshing mechanism including a threshing cylinder 14, a straw beater 16 and a separator rotor 18. Conventional straw walkers 20 are operable, in use, to discharge a mat of remaining crop material (i.e. mainly straw as the grain is separated therefrom) through the straw hood 21. Grain which has been separated from the straw falls onto the grain cleaning mechanism 9 which comprises means to separate chaff and other impurities from the grain, and means to separate unthreshed parts, known as tailings. Cleaned grain is then elevated into the grain tank 7 and the tailings are reprocessed in separate tailings rethreshers (not shown) and returned to the cleaning mechanism 9 for repeated cleaning action.

The downwardly facing straw hood 21, which defines a discharge outlet 22, comprises a pair of spaced-apart longitudinally extending sidewalls 24 joined by a rear end portion 26 and a top wall portion 28. A residue material treating device in the form of a conventional straw chopper 30 is mounted in the vicinity of the straw outlet 22 of the straw hood 22. A straw deflector device, incorporating the improvement of the present invention and of which the function will be described hereinafter, is visualised schematically at 32.

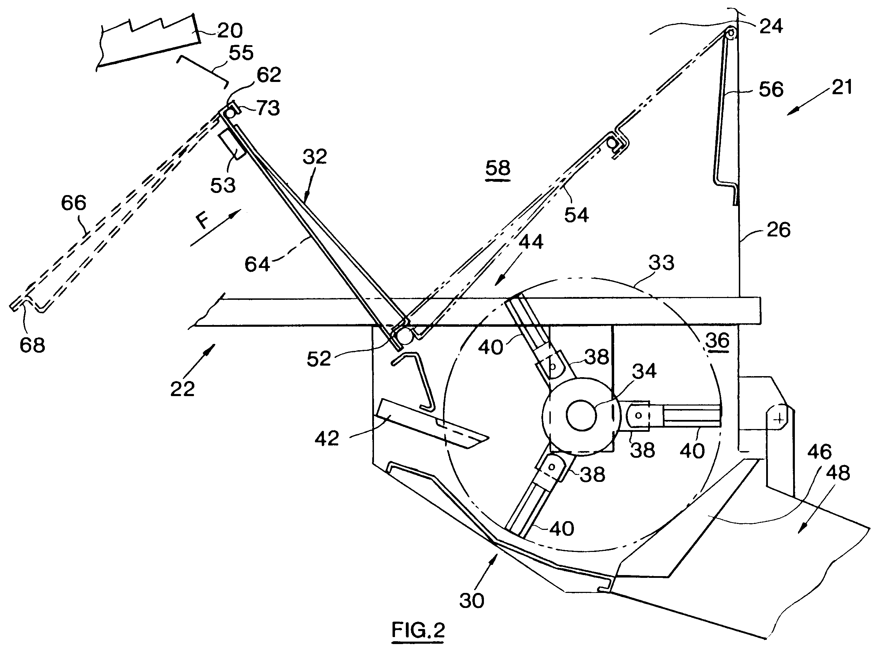

Referring more specifically to Figure 2, the straw chopper 30 is fixedly secured by means of a bolt and nut connection to the downwardly facing side of the straw hood 21 at the rearmost portion of the outlet 22 thereof. In as much as the straw chopper 30 gains rigidity due to its immovable connection with the straw hood 21, the chopper structure may be a light-weight and simple construction. The chopper 30 comprises a rotor 33 extending transversely of the combine and having a rotor shaft 34 which is rotatably supported by bearings (not shown) between side walls 36 of the chopper 30. The shaft 34 extends through one of the sidewalls 36 for being driven by a belt and pulley drive (not shown) in operative connection with the motor 10 whereby the rotor 33 is rotatably driven in a counter-clockwise direction as seen in Figure 2.

Circumferentially and axially positioned on the rotor shaft 34 are knife supports 38 to which knives 40 are pivotally attached for extending generally radially outwardly on rotation to chop the straw in cooperation with a bank of fixed counter-knives 42, provided transversely parallel to the rotor 33. An inlet opening 44 extends across the top front part of the chopper 30 for receiving material to be chopped which thereafter is discharged from the combine 1 through an outlet 46. A series of vanes, generally indicated at 48, extend rearwardly from the chopper 30 to scatter the chopped material rearwardly of the combine harvester 1. In as much as the chopper 30 is of a conventional design and is well known to anyone skilled in the art, a further more detailed description is not believed necessary.

The straw deflector device or deflector plate 32 already mentioned is hingeably supported around a pivot axis defined by a shaft 52 bearing on the sidewalls 36 of the chopper 30 at the front edge of the inlet opening 44 thereof. In a first, full line position of Figure 2, the deflector plate 32 is slantingly arranged between the rear end of the straw walkers 20 and the front part of the chopper 30 so as to guide the straw issuing from the straw walkers 20 into the inlet opening 44 of the chopper 30. In said first position, the deflector 32 rests against abutment tabs 53 which are provided interiorly of the straw hood 21. In a second, broken line position 54 of the deflector 32, the inlet 44 of the chopper 30 is covered thereby uncovering the discharge outlet 22 of the straw hood 21 for allowing the discharged straw to bypass the chopper 30 and to be deposited directly onto the ground. A handle (not shown) is provided exteriorly of the straw hood 21 for disposing the deflector 32 either in its first or its second position.

In the configuration as shown in Figure 2, a grain loss detector 55 is provided underneath the discharge end of the straw walkers 20. As a result, the free distance between the straw walker arrangement and the chopper is reduced, thereby proportionally reducing the required length of the deflector 32, as seen in the direction of material passing thereover. Consequently, in its second position, the deflector is unable to fully reach towards the rear wall 26 of the straw hood 21. In that case, it is necessary to provide an additional deflector plate 56 in the straw hood 21 which can be brought into alignment with the deflector 32, when arranged in the broken line position 54, in order to fully close the passage towards the chopper 30. An arrangement of that kind is disclosed in more details in EP-B-0.212.269, to which reference has been made already.

It will be appreciated however that in another configuration (as schematically shown in Figure 1), wherein no grain loss detector is provided underneath the straw walkers 20 and wherein the free distance between said straw walkers 20 and the chopper 30 is relatively large, one single deflector 32 is sufficient to completely shield off the chopper 30 from straw issuing from the straw walkers 20.

As best seen in Figure 2, in case the chopper 30 is rigidly attached to the straw hood 21, it is practically impossible to gain access to the region or compartment 58 just above the chopper 30 underneath the straw hood 21 in a convenient manner; an operation which sometimes may be imperative for servicing the chopper knives 40 or to unplug the chopper 30 and/or compartment 58, when for one or other reason this area has become obstructed. Indeed, the compartment 58 is on the one hand laterally confined by solid walls being the side walls 24 and rear wall 26 of the straw hood 21 and the deflector plate 32 (when in its first, forwardly inclined position), and on the other hand is closed at the bottom by the chopper 30 which is not readily removable. Also, in as much as the top surface of the straw walkers 20 present serrated edges, which could cause serious injuries, it is not preferred and even dissuaded to reach into the compartment 58 from a position lying on top of the straw walkers 20. It is also far from practical to rotate the deflector plate 32 to a position halfway between its extreme positions and to reach from underneath the straw hood 21 over said deflector 32 for servicing purposes. Moreover, when there is a severe blockage of crop material inbetween the straw walkers 20 and the chopper 30, it even would be impossible to urge the deflector 32 towards its rearwardly inclined position 54 as a result of the obstructed crop material bearing against it.

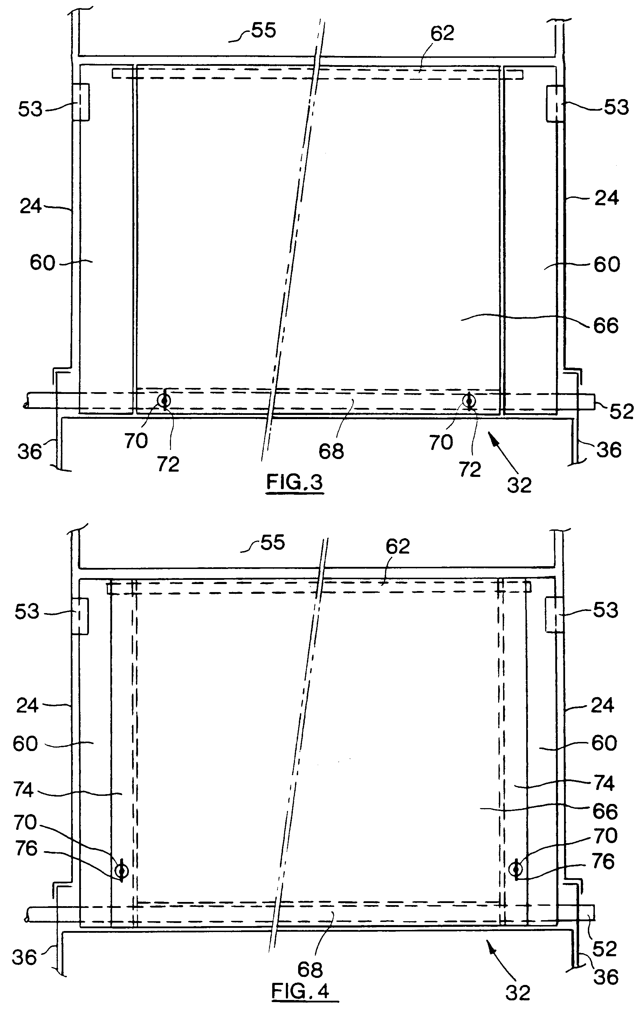

To improve the accessibility in accordance with the aim of the invention and referring to Figures 2 and 3, the deflector 32 basically comprises a frame structure being composed of the transversely extending shaft 52, two transversely spaced, upstanding wall portions 60 and a second shaft 62, arranged parallel to the shaft 52 and interconnecting said wall portions 60 with each other at the top edges thereof. As all parts are firmly secured to each other, such as by welding, and since the upstanding portions 60 are double-walled, a self-supporting frame structure is obtained. Said frame structure defines a central rectangular aperture 64, which, during normal operating conditions of the combine harvester 1, is closed by a hatch or door 66. The hatch 66 equally consists of a double-walled plate rotatably hanging down on the shaft 62 and closely fitting within the aperture 64 in a manner such that, when the hatch 66 is closed, the deflector plate 32 presents a smooth straw deflecting surface on both sides thereof. On the bottom side of the hatch 66, a protruding edge 68 is provided for abutting against the shaft 52. Said edge 68 comprises apertures 70 which fit over quick-release latches 72 which are attached to the shaft 52. The upper edge of the hatch comprises an inverted U-shaped ridge 73 which releasably hooks around the shaft 62.

When the operator wants to gain access to the compartment 58 e.g. for clearing an obstruction of crop material therein, he first makes sure, for safety reasons, that the chopper 30 is arrested completely. Thereafter, the latches 72 are released and the hatch 66 is either hinged to the dashed line position of Figure 2 wherein it can be maintained by a convenient supporting mechanism (not shown) for as long as the operator has to reach into the compartment 58 or is unhooked from the shaft 62 and set aside. Upon removal of the obstruction, the hatch 66 is closed whereafter the normal harvesting operation can be resumed.

In an alternative embodiment, shown in Figure 4, the hatch 66 comprises single-walled extensions 74 at the lateral sides thereof which partially overlap the upstanding wall portions 60. In an identical manner as in Figure 3, quick-release latches, generally indicated at 76, are operable to maintain the hatch 66 in its closed position.

It will be appreciated that the hatch 66 may be constructed in various other ways which do not depart from the scope of the invention. As an example, the hatch may pivot around a shaft coaxially arranged with the lower shaft 52 instead of around the upper shaft 62. In a still further embodiment, a generally vertical pivot axis for the hatch 66 may be provided. Also, the hatch 66 may be fastened in its closed position by other latch mechanisms, such as by a bolt and nut connection. However, in all embodiments, it is a prerequisite that the deflector plate 32, with the hatch 66 closed, does not present any protruding obstacles around which crop material, issuing from the straw walkers 20, could entangle whereby the smooth flow of crop material towards either the chopper 30 or the outlet 22 would be hampered.

## Claims

1. A combine harvester (1) comprising :
- a discharge outlet (22) for receiving residue material such as straw issuing from the combine harvester (1);
- a residue chopping device (30) mounted in the vicinity of said discharge outlet (22) for treating said residue material and discharging the same onto the ground; and
- crop deflector means (32) mounted above said residue chopping device (30) and adapted to be disposed between a first position wherein said residue material is deflected into said chopping device (30) and a second position (54) wherein said residue material is deflected through said discharge outlet (22) to thereby bypass said chopping device (30) and to be deposited onto the ground; and
characterized in that
said crop deflector means (32) comprises hatch means (66) for enabling access to an upper region (58) of the residue chopping device (30).

2. A combine harvester (1) according to claim 1 characterized in that
- the crop deflector means (32) is provided interiorly of a straw hood (21) and hingeable around a first pivot axis (52) arranged intermediate the discharge outlet (22) of said straw hood (21) and a crop inlet (44) of the chopping device (30); and
- the hatch means (66) is formed by a door (66) which is hingeable around a second pivot axis (62).

3. A combine harvester (1) according to claim 2 characterized in that said first pivot axis (52) and said second pivot axis (62) are disposed at opposite sides of the deflector means (32) in parallel relation to each other.

4. A combine harvester according to claim 2 characterized in that said first pivot axis (52) and said second pivot axis (62) are coincident with each other.

5. A combine harvester according to claim 2 characterized in that said first pivot axis (52) and said second pivot axis (62) are arranged at right angles to each other.

6. A combine harvester according to claim 3 characterized in that the deflector means (32) comprises a rectangular frame structure formed by a first shaft (52) and a second shaft (62) coincident with respectively said first and second pivot axes (52, 62), and frame members (60) interconnecting respectively adjacent ends of said first and second shafts (52, 62); the arrangement being such that said frame structure defines a central aperture (64) into which the door (66) closely fits.

7. A combine harvester according to claim 6 characterized in that the door (66) is releasably attached to the shaft (62) and is held in a position for closing the aperture (64) by means of quick-release latches (72, 76) provided on said rectangular frame structure.

8. A combine harvester according to claim 7 characterized in that the door (66) and the frame members (60) are double-walled; the arrangement being such that said door (66) and frame members (60) cooperate, in the closed position of the door (66), to define a smooth straw deflecting surface on both sides of the straw deflecting means (32).

9. A combine harvester according to any of the preceding claims characterized in that the crop deflector means (32) is formed by a single straw guiding plate (32).

10. A combine harvester according to any of the preceding claims characterized in that the crop deflector means (32) comprises a first straw guiding plate (32) and a second straw guiding plate (56); said second guiding plate (56) being pivotally mounted above the rear edge of the chopping device (30) and being adapted to be disposed either in alignment with said first guiding plate (32) for covering the inlet to the chopping device (30) or in a position to clear the inlet to the chopping device (30).

## Patentansprüche

1. Mähdrescher (1) mit:
- einem Auswurfauslaß (22) zur Aufnahme von Rückstandsmaterial, wie z.B. Stroh, das aus dem Mähdrescher (1) austritt,
- einer Rückstands-Häckselvorrichtung (30), die in der Nähe des Auswurfauslasses (22) angeordnet ist, um das Rückstandsmaterial zu behandeln und es auf den Boden abzugeben, und
- einer Erntematerial-Ablenkeinrichtung (32), die oberhalb der Rückstands-Häckselvorrichtung (30) befestigt und so ausgebildet ist, daß sie auf eine erste Stellung, in der das Rückstandsmaterial in die Häckselvorrichtung (30) abgelenkt wird, und auf eine zweite Stellung (54) einstellbar ist, in der das Rückstandsmaterial durch den Auswurf-Auslaß (22) unter Umgehung der Häckselvorrichtung (30) umgelenkt wird, um auf dem Boden abgelegt zu werden,
dadurch gekennzeichnet, daß
- die Erntematerial-Ablenkvorrichtung (32) Zugangsklappeneinrichtungen (66) umfaßt, die einen Zugang an einen oberen Bereich (58) der Rückstands-Häckselvorrichtung (30) ermöglichen.

2. Mähdrescher (1) nach Anspruch 1,
dadurch gekennzeichnet, daß
- die Erntematerial-Ablenkeinrichtung (32) im Inneren einer Strohhaube (21) vorgesehen und gelenkig um eine erste Schwenkachse (52) verschwenkbar ist, die zwischen dem Auswurf-Auslaß (22) der Strohhaube (21) und einem Erntematerial-Einlaß (44) der Häckselvorrichtung (30) angeordnet ist, und
- die Zugangsklappeneinrichtung (66) durch eine Klappe (66) gebildet ist, die um eine zweite Schwenkachse (62) verschwenkbar ist.

3. Mähdrescher (1) nach Anspruch 2,
dadurch gekennzeichnet, daß die erste Schwenkachse (52) und die zweite Schwenkachse (62) auf entgegengesetzten Seiten der Ablenkeinrichtung (32) parallel zueinander angeordnet sind.

4. Mähdrescher nach Anspruch 2,
dadurch gekennzeichnet, daß die erste Schwenkachse (52) und die zweite Schwenkachse (62) miteinander zusammenfallen.

5. Mähdrescher nach Anspruch 2,
dadurch gekennzeichnet, daß die erste Schwenkachse (52) und die zweite Schwenkachse (62) unter rechten Winkeln zueinander angeordnet sind.

6. Mähdrescher nach Anspruch 3,
dadurch gekennzeichnet, daß die Ablenkeinrichtung (32) eine rechtwinklige Rahmenstruktur umfaßt, die durch eine erste Welle (52) und eine zweite Welle (62), die mit der ersten bzw. der zweiten Schwenkwelle (52, 62) zusammenfallen, und Rahmenteile (60) gebildet ist, die jeweils benachbarte Enden der ersten und zweiten Wellen (52, 62) miteinander verbinden, wobei die Anordnung derart ist, daß die Rahmenstruktur eine Mittelöffnung (64) bildet, in die die Klappe (66) eng paßt.

7. Mähdrescher nach Anspruch 6,
dadurch gekennzeichnet, daß die Klappe (66) lösbar an der Welle (62) befestigt ist und in einer Position zum Schließen der Öffnung (64) mit Hilfe von Schnellöse-Regeln (72, 76) gehalten wird, die auf der rechtwinkligen Rahmenstruktur vorgesehen sind.

8. Mähdrescher nach Anspruch 7,
dadurch gekennzeichnet, daß die Klappe (66) und die Rahmenteile (60) doppelwandig sind, und daß die Anordnung derart ist, daß die Klappe (66) und die Rahmenteile (60) in der geschlossenen Stellung der Zugangsklappe (66) zusammenwirken, um eine glatte Strohleitfläche auf beiden Seiten der Strohablenkeinrichtung (32) zu bilden.

9. Mähdrescher nach einem der vorhergehenden Ansprüche, dadurch gekennzeichnet, daß die Erntematerial-Ablenkeinrichtung (32) durch ein einziges Stroh-Leitblech (32) gebildet ist.

10. Mähdrescher nach einem der vorhergehenden Ansprüche, dadurch gekennzeichnet, daß die Erntematerial-Ablenkeinrichtung (32) ein erstes Stroh-Leitblech (32) und ein zweites Stroh-Leitblech (56) umfaßt, daß das zweite Leitblech (56) schwenkbar oberhalb der Hinterkante der Häckselvorrichtung (30) befestigt ist und so ausgebildet ist, daß es entweder in Ausrichtung mit dem ersten Leitblech (32) angeordnet ist, um den Einlaß der Häckselvorrichtung (30) abzudecken, oder in einer Position zur Freigabe des Einlasses an die Häckselvorrichtung (30) angeordnet ist.

## Revendications

1. Moissonneuse-batteuse (1) comprenant:
- une extrémité de déchargement (22) qui recueille le matériau de rejet, tel que de la paille, provenant de la moissonneuse-batteuse;
- un dispositif de hachage du rejet (30), monté à proximité de ladite extrémité de déchargement (22) assurant le traitement dudit matériau de rejet et le déversant au sol; et
- un moyen de déflexion (32) monté au-dessus dudit dispositif de hachage (30) du rejet et adapté de telle façon qu'il peut être disposé dans une première position, où ledit matériau de rejet est orienté dans ledit dispositif de hachage (30), et dans une seconde position (54), où ledit matériau de rejet est dévié à travers ladite extrémité de déchargement (22), pour ainsi éviter ledit dispositif de hachage (30) et être déposé au sol; et
caractérisée en ce que
ledit moyen de déflexion (32) comprend un moyen de portillon (66) permettant un accès à la partie supérieure (58) du dispositif de hachage de rejet (30).

2. Une moissonneuse-batteuse (1) selon la première revendication, caractérisée en ce que:
- le moyen de déflexion de paille (32) est installé à l'intérieur d'un capot à paille (21) et qui pivote autour d'un premier axe de pivotement (52), disposé entre la sortie de déchargement (22) dudit capot à paille (21) et d'une ouverture d'introduction (44) d'un dispositif de hachage (30); et
- le moyen de portillon (66) est constitué d'une porte (66) pivotante autour d'un second axe de pivotement (62).

3. Une moissonneuse-batteuse (1) selon la deuxième revendication, caractérisée en ce que ledit premier axe de pivotement (52) et ledit second axe de pivotement (62) sont disposés aux côtés opposés du moyen de déflexion (32), parallèlement entre eux.

4. Une moissonneuse-batteuse selon la deuxième revendication, caractérisée en ce que ledit premier axe de pivotement (52) et ledit second axe de pivotement (62) coïncident entre eux.

5. Une moissonneuse-batteuse selon la deuxième revendication, caractérisée en ce que ledit premier axe de pivotement (52) et ledit second axe de pivotement (62) sont disposés perpendiculairement entre eux.

6. Une moissonneuse-batteuse selon la troisième revendication, caractérisée en ce que le moyen de déflexion (32) comprend une structure rectangulaire de base formée par un premier axe (52) et un second axe (62) coïncidant avec lesdits premier et second axes de pivotement (52, 62) respectifs, et des éléments de structure (60) reliant les extrémités adjacentes respectives desdits premier et second axes (52, 62); l'arrangement étant tel que ladite structure de base définit une ouverture centrale (64) à laquelle la porte (66) s'adapte étroitement.

7. Une moissonneuse-batteuse selon la sixième revendication, caractérisée en ce que la porte (66) est fixée amoviblement à l'axe (62) et est maintenue dans une position de fermeture de l'ouverture (64) aux moyens de verrouillage rapide (72, 76) prévus sur ladite structure rectangulaire de base.

8. Une moissonneuse-batteuse selon la septième revendication, caractérisée en ce que la porte (66) et les éléments de structure (60) sont à double paroi; l'arrangement étant tel que ladite porte (66) et lesdits éléments de structure (60) s'associent, en position fermée de la porte (66), pour définir une surface unie de déflexion de la paille sur les deux faces du moyen de déflexion de paille (32).

9. Une moissonneuse-batteuse selon l'une des revendications précédentes, caractérisée en ce que le moyen de déflexion de paille (32) est constitué d'une plaque unique de guidage (32) de paille.

10. Une moissonneuse-batteuse selon l'une des revendications précédentes, caractérisée en ce que le moyen de déflexion de paille (32) comprend une première plaque de guidage de paille (32) et une seconde plaque de guidage de paille (56); ladite seconde plaque de guidage de paille (56) étant montée avec pivotement au-dessus du bord arrière du dispositif de hachage (30) et étant adaptée pour être disposée, soit en alignement avec ladite première plaque de guidage de paille (32) pour recouvrir l'ouverture d'introduction vers le dispositif de hachage (30), soit dans une position pour dégager l'ouverture d'introduction vers le dispositif de hachage (30).
